(19) Europäisches Patentamt
European Patent Office
Office européen des brevets

(11) **EP 2 538 239 B1**

(12) **EUROPÄISCHE PATENTSCHRIFT**

(45) Veröffentlichungstag und Bekanntmachung des Hinweises auf die Patenterteilung:
**13.11.2013 Patentblatt 2013/46**

(51) Int Cl.:
*G08G 1/01* *(2006.01)*       *G01S 7/41* *(2006.01)*
*G01S 13/88* *(2006.01)*      *G01S 13/91* *(2006.01)*
*G08G 1/04* *(2006.01)*       *G01S 13/58* *(2006.01)*

(21) Anmeldenummer: **11450080.4**

(22) Anmeldetag: **21.06.2011**

(54) **Verfahren und Vorrichtung zur Detektion von Rädern**

Device and method for detecting wheels

Procédé et dispositif destinés à la détection de roues

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.12.2012 Patentblatt 2012/52**

(73) Patentinhaber: **Kapsch TrafficCom AG**
**1120 Wien (AT)**

(72) Erfinder: **Nagy, Oliver**
**1190 Wien (AT)**

(74) Vertreter: **Weiser, Andreas**
**Patentanwalt**
**Kopfgasse 7**
**1130 Wien (AT)**

(56) Entgegenhaltungen:
**DE-A1-102008 037 233    US-A1- 2010 286 898**

**Beschreibung**

Die vorliegende Erfindung betrifft ein Verfahren und eine Vorrichtung zur Detektion von Rädern eines Fahrzeugs, das auf einer Fahrbahn in einer Fahrtrichtung fährt und dessen Räder zumindest teilweise seitlich freiliegen.

Das Detektieren von Fahrzeugrädern ist bei zahlreichen Anwendungen von Interesse. So kann aus dem Erkennen von Rädern mit Sicherheit das Befahren einer bestimmten Verkehrsfläche erkannt werden, beispielsweise zur Grenzüberwachung oder zur Auslösung bestimmter Aktionen, wie das Auslösen eines Alarms, Einschalten einer Beleuchtung, Öffnen eines Schrankens, Aufnehmen eines Fotos zu Überwachungszwecken usw. Auch moderne Verkehrsgebührensysteme stellen häufig zur Gebührenbemessung auf die Achsanzahl von Fahrzeugen ab, sodass das Detektieren von Rädern (Radachsen) auch eine wichtige Grundlage für Straßenmaut- oder Parkgebührensysteme sein kann.

Aus der DE 10 2008 037 233 A1 ist es bekannt, Räder eines sich bewegenden Fahrzeugs aufgrund ihrer gegenüber dem restlichen Fahrzeug unterschiedlichen horizontalen Komponente der Tangentialgeschwindigkeit, die eine entsprechende Doppler-Frequenzverschiebung eines Radar-Messstrahls bewirkt, zu detektieren. Dazu wird ein Radar-Geschwindigkeitsmesser verwendet, welcher mit einer Radar-Strahlungskeule den unteren Bereich passierender Fahrzeuge bestrahlt und aus dem zurückgehaltenen Empfangsfrequenzgemisch ein einziges Geschwindigkeitsmesssignal mittelt, das an den Orten der Räder Signalmaxima zeigt. Eine automatische Detektion solcher Maxima in einem Signalverlauf erfordert eine signalanalytische Extremwertsuche und ist dementsprechend aufwändig. Darüber hinaus können z.B. Lücken zwischen einem Zugfahrzeug und seinem Anhänger Signalminima und damit zwischenliegende "falsche" Maxima vortäuschen, welche zu einer fehlerhaften Raddetektion führen.

Die Erfindung setzt sich zum Ziel, Verfahren und Vorrichtungen zur Raddetektion zu schaffen, welche eine sicherere Detektion ermöglichen als die bekannten Lösungen.

Dieses Ziel wird in einem ersten Aspekt der Erfindung mit einem Verfahren erreicht, das sich auszeichnet durch die Schritte

Aussenden einer elektromagnetischen Messstrahlkeule mit einem bekannten zeitlichen Verlauf ihrer Frequenz von der Seite der Fahrbahn her auf einen Bereich über der Fahrbahn und schräg zur Fahrtrichtung,

Empfangen der von einem passierenden Fahrzeug reflektierten Messstrahlkeule und Aufzeichnen aller ihrer Frequenzen im zeitlichen Verlauf relativ zum bekannten Verlauf als Empfangsfrequenzgemischverlauf, und

Detektieren einer während der Fahrzeugpassage auftretenden Frequenzaufspreizung im aufgezeichneten Verlauf des Empfangsfrequenzgemischs, welche einen vorgegebenen Schwellwert übersteigt, als Rad.

Die Erfindung beruht auf dem neuartigen Ansatz, Räder eines sich bewegenden Fahrzeugs aufgrund ihrer gegenüber dem restlichen Fahrzeug unterschiedlichen horizontalen Komponente der Tangentialgeschwindigkeit, die eine entsprechende Doppler-Frequenzverschiebung eines Lidar- oder Radar-Messstrahls bewirkt, zu detektieren. Bei Verwendung eines über einen größeren Strahlquerschnitt ausgedehnten Messstrahls ("Messstrahlkeule"), welcher z.B. kegelförmig über einen Raumwinkel aufgefächert bzw. verteilt ist, trifft dieser zumindest einen Teil eines passierenden Rades über einen ausgedehnten Auftreffbereich, z.B. eine Ellipse mit einer Höhe bzw. Breite im Bereich von 10 cm - 50 cm. Auf jeder verschiedenen Höhe eines sich drehenden Rades hat dieses eine - über seine Breite konstante - verschiedene horizontale Komponente seiner Tangentialgeschwindigkeit und erzeugt damit eine unterschiedliche Dopplerfrequenzverschiebung, welche zu einer "Aufsplitterung" bzw. "Aufspreizung" der Sendefrequenz der Messstrahlkeule auf eine Vielzahl vom drehenden Rad zurückgeworfener Empfangsfrequenzen führt. Ein sich drehendes Rad erzeugt damit, wenn es von einer Messstrahlkeule über einen ausgedehnten Höhenbereich getroffen wird, über seine Höhe eine Frequenzaufspreizung im Empfangsspektrum, was zur Detektion des Rades ausgenützt werden kann.

Der vorgenannte Effekt ist von einem zweiten parasitären Frequenzaufspreizungseffekt überlagert, welcher auf die unterschiedlichen Projektionswinkel der horizontalen Komponente der Tangentialgeschwindigkeit auf die Richtung zum Empfänger zurückzuführen ist: diese Projektionsrichtung variiert je nach betrachtetem Reflexionsort im Auftreffbereich. Dieser zweite Aufspreizungseffekt ist davon unabhängig, ob gerade die Fahrzeugkarosserie oder das sich drehende Rad den Empfänger passiert, und ist einzig durch die geometrischen Randbedingungen der Messanordnung bestimmt. Das Maß an Aufspreizung, welches zur Detektion eines Rades von der erstgenannten dopplereffektbedingten Frequenzaufsplitterung überschritten werden muss, wird daher so festgelegt, dass die durch die zweitgenannte geometriebedingte Frequenzaufsplitterung hervorgerufene Aufspreizung darunterliegt. Im Ergebnis wird ein Raddetektionsverfahren mit hoher Detektionssicherheit erzielt, u.zw. aufgrund der von einem Rad hervorgerufenen "Doppler-Signatur".

Bevorzugt wird somit der vorgegebene Schwellwert zuvor aus jener Frequenzaufspreizung ermittelt, die bei der Passage eines radlosen Teils eines Fahrzeugs auftritt. Dadurch kann das Verfahren vor Ort durch Referenzmessungen kalibriert werden.

In einem zweiten Aspekt schafft die Erfindung eine Vorrichtung zur Detektion von Rädern eines Fahrzeugs, das auf einer Fahrbahn in einer Fahrtrichtung fährt und dessen Räder zumindest teilweise seitlich freiliegen, gekennzeichnet durch

zumindest ein Doppler-Lidar- oder -Radargerät, das eine elektromagnetische Messstrahlkeule mit einem bekannten zeitlichen Verlauf ihrer Frequenz auf ein Ziel aussendet und alle Frequenzen der vom Ziel reflektierten Messstrahlkeule im zeitlichen Verlauf relativ zum bekannten Verlauf als Empfangsfrequenzgemischverlauf aufzeichnet,

wobei die Messstrahlkeule von der Seite der Fahrbahn her auf einen Bereich über der Fahrbahn und schräg zur Fahrtrichtung orientiert ist, und

eine nachgeordnete Auswerteeinrichtung, welche eine während der Fahrzeugpassage auftretende Frequenzaufspreizung im aufgezeichneten Verlauf des Empfangsfrequenzgemischs, die einen vorgegebenen Schwellwert übersteigt, als Rad detektiert.

Hinsichtlich der Vorteile der erfindungsgemäßen Vorrichtung wird auf die obigen Ausführungen zum erfindungsgemäßen Verfahren verwiesen.

Die Erfindung eignet sich - wenn sie mit einem Doppler-Radargerät arbeitet - besonders zum Zusammenbau mit den Funkbaken einer bereits vorhandenen Funk-Straßeninfrastruktur, wie WLAN (wireless local area network), WAVE (wireless access in a vehicle environment) oder DSRC (deticated short range communication). Eine besonders vorteilhafte Ausführungsform der Erfindung zeichnet sich demgemäß dadurch aus, dass das Doppler-Radargerät durch eine straßenseitige WLAN-, WAVE- oder DSRC-Funkbake gebildet ist.

Weitere Merkmale und Vorteile des Verfahrens und der Vorrichtung der Erfindung ergeben sich aus der nachfolgenden Beschreibung eines bevorzugten Ausführungsbeispiels unter Bezugnahme auf die begleitenden Zeichnungen, in denen zeigt:

Fig. 1 eine erste Ausführungsform einer Vorrichtung zur Raddetektion zur Erläuterung der Grundlagen der Erfindung in einer schematischen Perspektivansicht;

Fig. 2 mehrere beispielhafte Abtastverläufe des Messstrahls der Vorrichtung von Fig. 1 an einem passierenden Fahrzeug;

Fig. 3 Zeitdiagramme der ermittelten Empfangsfrequenz- bzw. Geschwindigkeitsverläufe zu den Abtastverläufen von Fig. 2;

Fig. 4 die Geschwindigkeitsverhältnisse an einem sich drehenden Rad im Detail;

Fig. 5 eine Ausführungsform der Vorrichtung der Erfindung in einer schematischen Perspektivansicht;

Fig. 6 die Superposition von mehreren Empfangsfrequenz- bzw. Geschwindigkeitsverläufen von Fig. 3 zur Veranschaulichung der dopplerbedingten Frequenzaufspreizung bei der Passage eines Rades;

Fig. 7 die geometrischen Verhältnisse in der Messstrahlkeule der Vorrichtung von Fig. 5 zur Veranschaulichung der geometriebedingten Frequenzaufspreizung bei der Passage eines Fahrzeugs;

Fig. 8 den Effekt der geometriebedingten Frequenzaufspreizung bei der Passage im zeitlichen Verlauf;

Fig. 9 die kombinierte Auswirkung der geometriebedingten Frequenzaufspreizung von Fig. 8 und der dopplerbedingten Frequenzaufspreizung von Fig. 6 bei der Passage eines Fahrzeugs im zeitlichen Verlauf; und

Fig. 10 eine Variante von Fig. 9.

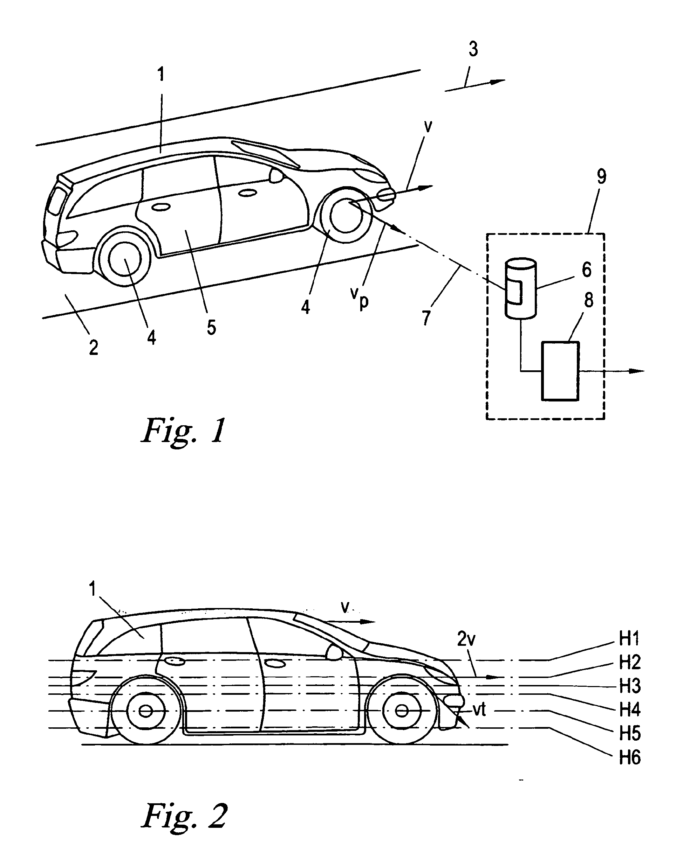

In Fig. 1 bewegt sich ein Fahrzeug 1 auf einer Fahrbahn 2 in einer Fahrtrichtung 3. Das Fahrzeug 1 besitzt Räder 4, welche nach unten über die Karosserie 5 des Fahrzeugs 2 vorragen und dabei - zumindest teilweise - an den Seiten der Karosserie in Ausnehmungen derselben freiliegen, d.h. von der Seite her sichtbar sind.

Ein Doppler-Lidar- oder Radargerät 6 sendet einen gebündelten Lidar- oder Radar-Messstrahl 7 schräg zur Fahrtrichtung 3 von der Seite der Fahrbahn 1 her knapp über die Fahrbahnoberfläche aus, sodass der Messstrahl 7 ein passierendes Fahrzeug 1 etwa im Bereich seiner Räder 4 trifft.

Das Doppler-Lidar- bzw. Radargerät 6 wertet, wie in der Technik bekannt, die Empfangsfrequenz des vom Fahrzeug 1 bzw. seinen Rädern 4 reflektierten Messstrahls 7 aus, wobei aus der dopplereffektbedingten Frequenzverschiebung zwischen ausgesandtem und reflektiertem Messstrahl 7 die in Richtung des Messstrahls 7 liegende (projizierte) Komponente $v_p$ der Geschwindigkeit v des Fahrzeugs 1 bzw. der Tangentialgeschwindigkeit $v_t$ (Fig. 2) des Rades 4 am Auftreffpunkt des Messstrahls 7 ermittelt werden kann. In weiterer Folge können aus dieser Information die Räder 4 des Fahrzeugs 1 detektiert werden, wie später noch ausführlicher erläutert wird. Zu diesem Zweck ist dem Gerät 6 auch eine Auswerteeinrichtung 8 nachgeschaltet, welche die entsprechenden Auswertungen der Empfangsfrequenz des Messstrahls 7 vornimmt. Lidar/Radar-Gerät 6 und Auswerteeinrichtung 8 bilden somit zusammen eine Vorrichtung 9 zur Detektion von Rädern 4 eines Fahrzeugs 1.

Das Doppler-Lidar/Radar-Gerät 6 kann an sich von jeder in der Technik bekannten Art sein, sei es mit einem kontinuierlichen, modulierten oder einem gepulsten Messstrahl 7. Bei einem kontinuierlichen Messstrahl 7 kann eine Dopplerfrequenzverschiebung zwischen den Eigenfrequenzen ("Trägerfrequenzen") des ausgesandten und des reflektierten Messstrahl 7 z.B. durch Interferenzmessung ermittelt werden. Bei einem gepulsten oder modulierten Messstrahl kann eine Dopplerverschiebung zwischen den Impulsraten bzw. Modulationsfrequenzen des ausgesandten und des reflektierten Messstrahls 7 gemessen werden. Alle solche Eigen-, Träger-, Impuls- oder Modulationsfrequenzen werden unter dem hier verwendeten Begriff der "Empfangsfrequenz" des Messstrahls 7 verstanden, d.h. der Begriff Empfangsfrequenz umfasst jedwede durch einen Dopplereffekt beeinflussbare Frequenz des Messstrahls 7.

Grundsätzlich ist auch die Natur des Messstrahls 7 selbst beliebig, solange es sich um eine elektromagnetische Welle handelt, sei es sichtbares Licht oder Infrarotlicht wie bei einem Lidargerät oder Radiowellen (Funkwellen), insbesondere Mikrowellen, bei einem Radargerät.

Der Messstrahl 7 ist in dem Erläuterungsbeispiel von Fig. 1 stark gebündelt, sodass sein Auftreffpunkt auf der Karosserie 5 bzw. dem Rad 4 einen äußerst geringen Durchmesser hat.

Fig. 2 zeigt die Abtastverläufe eines derart gebündelten Messstrahls 7, der im wesentlichen punktförmig auf das Fahrzeug 1 bzw. dessen Räder 4 auftrifft, während der Vorbeifahrt (Passage) des Fahrzeugs 1 an der Vorrichtung 9. Zu Erläuterungszwecken sind beispielhaft sechs unterschiedliche Abtastverläufe H1 bis H6 gezeigt; es versteht sich, dass durch einen gebündelten Messstrahl 7 bei einer Fahrzeugpassage jeweils nur ein einziger Abtastverlauf H1 - H6 auftritt.

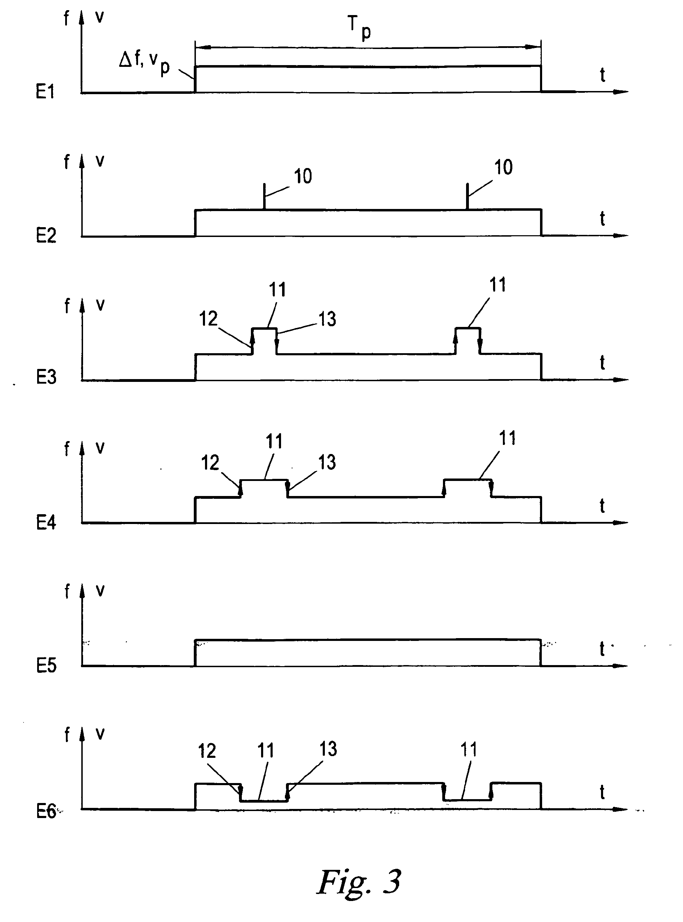

Fig. 3 zeigt die zu den Abtastverläufen H1 - H6 vom Lidar/Radar-Gerät 6 fortlaufend erfasste Empfangsfrequenz f des reflektierten Messstrahls 7 über der Zeit. Die Dopplerverschiebung $\Delta f$ der Empfangsfrequenz f gegenüber der Sendefrequenz ist proportional zur Geschwindigkeitskomponente $v_p$ der jeweils abgetasteten Teile des Fahrzeugs 1 bzw. Rades 4. Die in Fig. 3 dargestellten Empfangsfrequenzverläufe E1 - E6 sind daher gleichbedeutend mit Geschwindigkeitsverläufen.

Aus dem Empfangsfrequenzverlauf E1 von Fig. 3 ist ersichtlich, dass beim Abtastverlauf H1, welcher die Karosserie 5 des Fahrzeugs 1 außerhalb der Räder 4 trifft, während Dauer $T_p$ der Karossieriepassage eine weitgehend konstante Empfangsfrequenzverschiebung $\Delta f$ des Messstrahls 7 und damit Geschwindigkeitskomponente $v_p$ gemessen wird, welche sich als Rechteckimpuls R im Empfangsfrequenzverlauf äußert.

Für den Abtastverlauf H2, welcher die Räder 4 an ihrer obersten Stelle berührt, wo ihre Tangentialgeschwindigkeit $v_t$ sich zur Fahrzeuggeschwindigkeit v addiert, zeigt der Empfangsfrequenzverlauf E2 für jedes Rad 4 eine Spitze ("peak") 10 von 2vp über dem Karosserie-Rechteckimpulses R.

Wenn der Messstrahl 7 die Räder 4 auf einer Höhe zwischen der Radachse und der Radoberseite schneidet, wie bei den Abtastverläufen an H3 und H4, wird bei der Passage eines Rades 4 entsprechend der Projektion $v_p$ seiner Tangentialgeschwindigkeit $v_t$ auf die Messstrahlrichtung eine sich gegenüber dem Karosserie-Impuls R nochmals sprunghaft verändernde Dopplerverschiebung und damit Empfangsfrequenz bzw. Geschwindigkeit gemessen, wie durch die Rechteck-Impulse 11 der Verläufe E3 und E4 veranschaulicht. Jeder Impuls 11 umfasst jeweils eine ansteigende Flanke 12 und eine darauffolgende abfallende Flanke 13, d.h. zwei aufeinanderfolgende abwechselnde Frequenz-"Sprünge".

Der Empfangsfrequenzverlauf E5 zeigt den Sonderfall, dass der Messstrahl 7 die Räder 4 genau auf Höhe ihrer Achse trifft, wo keine in Richtung des Messstrahls 7 projizierbare Tangentialgeschwindigkeit des Rades vorhanden ist, sodass die Räder 4 nicht detektierbar sind.

Der Empfangsfrequenzverlauf E6 tastet die Räder 4 auf einer Höhe zwischen ihrer Unterseite und ihrer Achse ab und ähnelt jenem von E4, nur mit umgekehrten Änderungen 11 - 13.

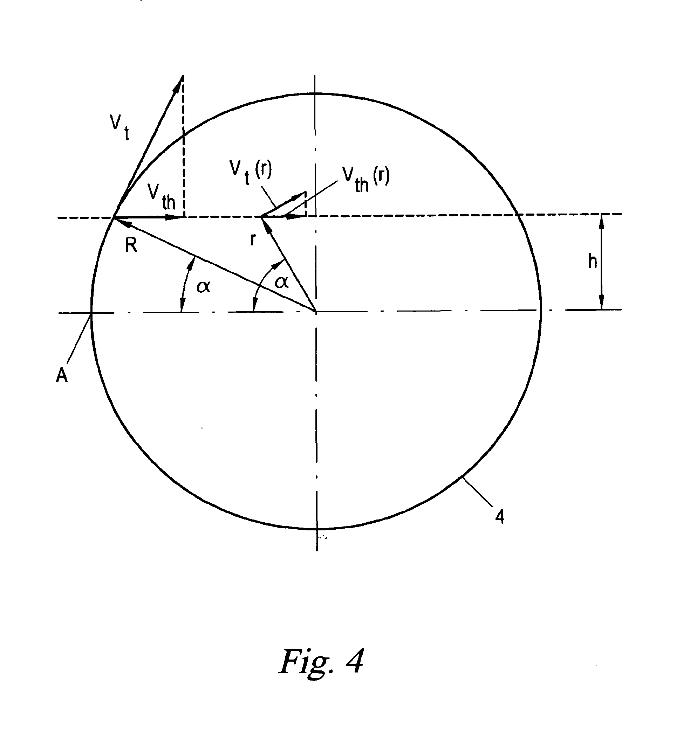

Fig. 4 zeigt analytisch das Ausmaß des Versatzes 11 bei der Passage eines Rades 4 in Abhängigkeit der Höhe h des jeweiligen Abtastverlaufes H1 bis H6 gegenüber der Radachse A, beispielsweise am Abtastverlauf H4. Sei R der Radius des Rades 4 und r ein beliebiger Radius innerhalb des Rades 4, dann ist die Tangentialgeschwindigkeit $v_t$ (r) auf einem Radius r proportional diesem Radius r, u.zw. gemäß

$$v_t(r) = \frac{r}{R} v_t \qquad\qquad (1)$$

Die in Fahrtrichtung 3 liegende Horizontalkomponente $v_{th}(r)$ der Tangentialgeschwindigkeit $v_t$ (r) unter einem Winkel $\alpha$ ist eine Sinus-Projektion entsprechend

$$v_{th}(r) = \frac{r}{R} v_t \sin\alpha \qquad\qquad (2)$$

Mit

$$\sin\alpha = \frac{h}{r} \qquad\qquad (3)$$

ergibt sich die Tangentialgeschwindigkeits-Horizontalkomponente $v_{th}(r)$ damit zu

$$v_{th}(r) = v_t \frac{h}{R} \qquad\qquad (4)$$

Die Tangentialgeschwindigkeits-Horizontalkomponente $v_{th}(r)$ ist somit direkt proportional der jeweils betrachteten Höhe h des Abtastverlaufs und - während das Rad 4 abgetastet wird - über diese Höhe h konstant.

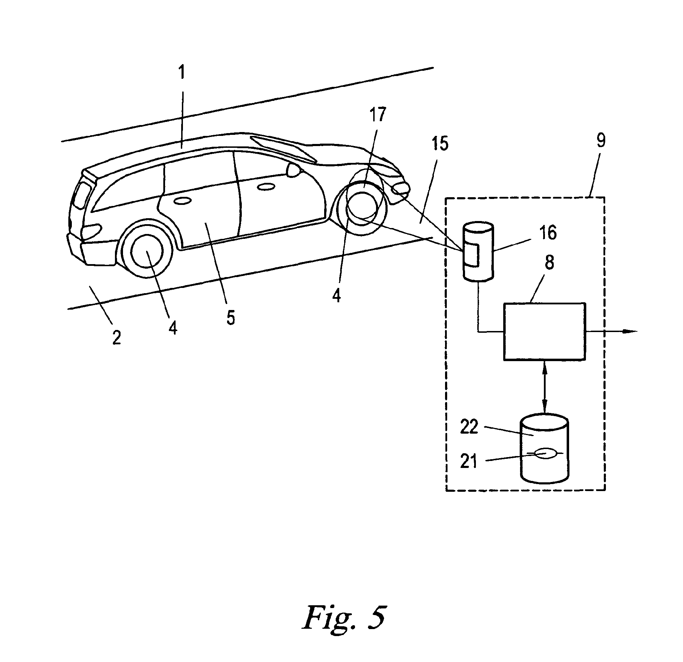

Fig. 5 zeigt eine Erweiterung des Verfahrens der Fig. 1 bis 4, bei welchem anstelle eines gebündelten Messstrahls 7 ein aufgefächerter, z.B. flächig oder trichterförmig gestreuter bzw. aufgeweiteter Messstrahl, im Folgenden kurz "Messstrahlkeule" 15 genannte, verwendet wird. Die Messstrahlkeule 15 kann bei einem Lidargerät z.B. durch eine vorgesetzte Zerstreuungslinse erreicht werden oder tritt bei Radargeräten auf, deren Bündelung nicht exakt ist. Fig. 5 zeigt als Beispiel ein Doppler-Radargerät 16, welches zusammen mit der Auswerteeinrichtung 8 die Vorrichtung 9 bildet.

Im Falle von Radar wird die Messstrahlkeule 15 durch den Öffnungswinkel der verwendeten Radarantenne charakterisiert. Unter dem Öffnungswinkel (oder auch Halbwertsbreite) einer Richtantenne bezeichnet man jeweils die Punkte, wo die Leistung gegenüber dem Maximum auf die Hälfte (-3 dB) abgefallen ist. Wie dem Fachmann geläufig, kann für Richtantennen aus der Kenntnis der jeweiligen Öffnungswinkel der Gewinn der Antenne in ihrer Hauptstrahlrichtung mit folgender Formel geschätzt werden:

$$g = 10 \lg \frac{27.000}{\Delta\varphi\,\Delta\vartheta}$$

wobei

g = Gewinn [dBi]

$\Delta\varphi$ = Horizontaler Öffnungswinkel (in Grad)

$\Delta\vartheta$ = Vertikaler Öffnungswinkel (in Grad)

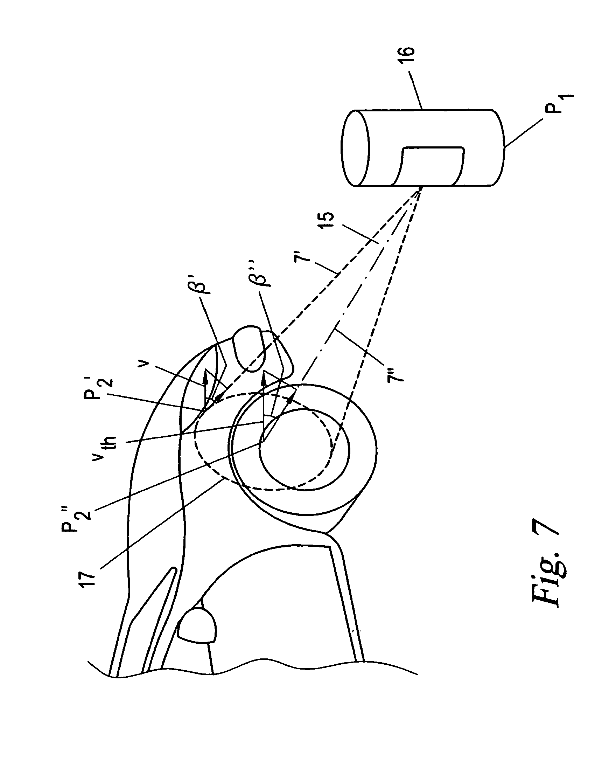

Der Öffnungswinkel der Radarantenne sollte eine gute Separierung der einzelnen Räder 4 im Messsignal des zu detektierenden Fahrzeugs 1 erlauben. Somit ist es besonders günstig, wenn der Auftreffbereich 17 der Messstrahlkeule 15 im wesentlichen die Größe eines Rades 4 des Fahrzeugs 1 hat und das Rad 4 nicht zur Gänze, sondern etwas oberhalb trifft, wie in Fig. 7 gezeigt. Der optimale Auftreffbereich 17 ergibt sich aus dem Messabstand zum Fahrzeug 1, somit hängt auch die Wahl der Radarantenne von der Geometrie der Gesamtanordnung ab. Besonders geeignet sind allgemein Antennen mit einem Gewinn g von über 10 dB, abhängig von der Anordnung und Frequenz des Radargeräts 16.

Richtantennen weisen üblicherweise einen Antennengewinn g von über 20 dB (entspricht einem Öffnungswinkel $\Delta\varphi = \Delta\vartheta$ = ca. 16°). Somit lässt sich bei 20 dB Antennengewinn in 2 m Abstand zum Fahrzeug 1 ein Bereich 17 von ca. 56 cm Durchmesser beleuchten. Für weiter entfernte Fahrzeuge 1 kann ein Antennengewinn g von 30 dB notwendig sein, um einen Öffnungswinkel $\Delta\varphi = \Delta\vartheta$ = ca. 5° zu erreichen, der in 10 m Abstand einen Bereich 17 von ca. 90 cm Ausleuchtung bedeutet.

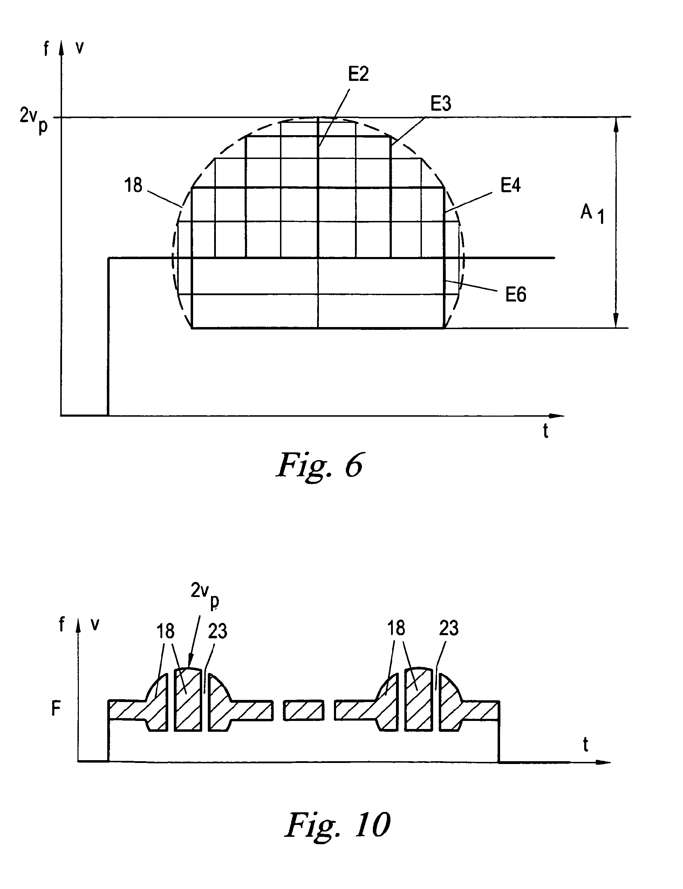

Bei Verwendung einer solchen Messstrahlkeule 15, welche einen größeren Bereich 17 des Fahrzeugs 1 bzw. der Räder 4 trifft, superponieren sich die von verschiedenen im Bereich 17 liegenden Auftreffpunkten - vgl. die beispielhaften Abtastverläufe H1 bis H6 in Fig. 2 - jeweils herrührenden Empfangsfrequenzen - vgl. E1 bis E6 - zu einem Gemisch 18 verschiedener Empfangsfrequenzen bzw. Geschwindigkeiten, siehe Fig. 6. Mit anderen Worten splittet bzw. spreizt sich während der Passage Tp eines Fahrzeugs 1 bei Auftreten eines Rades 4 die Empfangsfrequenz f in ein dopplereffektbedingtes Gemisch 18 von Empfangsfrequenzen bzw. Geschwindigkeiten auf, wobei das Ausmaß der Aufspreizung ("frequency spread") in Fig. 6 mit $A_1$ bezeichnet ist. Das Auftreten einer solchen Frequenzaufspreizung 18 kann daher als Kennzeichen für ein Rad 4 dienen.

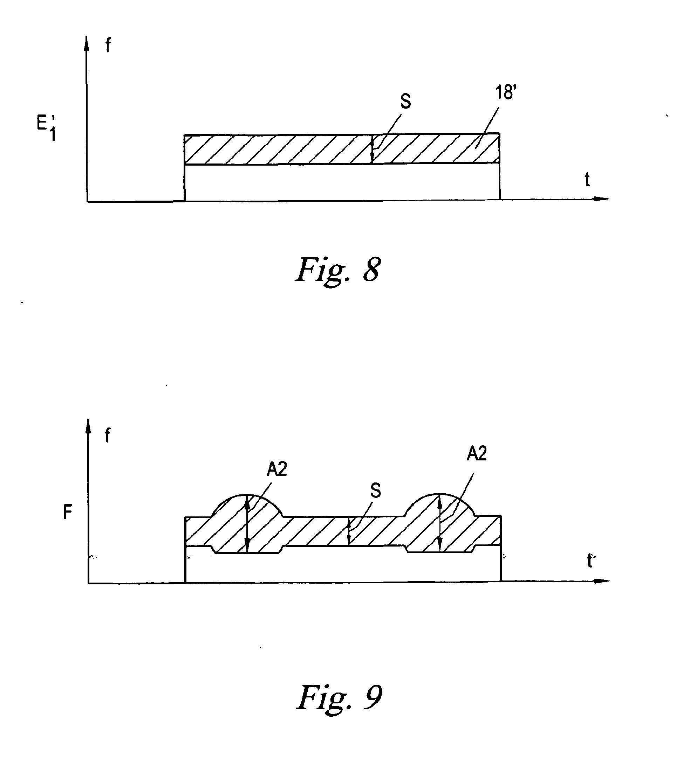

Die dopplereffektbedingte Frequenzaufspreizung 18 im Ausmaß $A_1$ ist parasitär von einem zweiten Frequenzaufspreizungseffekt überlagert, der durch die Geometrie der Messstrahlkeule 15 selbst bedingt ist. Wie aus Fig. 7 ersichtlich, beobachtet ein Radar/Lidar-Gerät 16 von seinem Ort $P_1$ aus verschiedene Punkte $P_2'$, $P_2''$ im Auftreffbereich 17 der Messstrahlkeule 15 unter jeweils einer anderen Raumrichtung 7', 7", die mit der Horizontalkomponente $v_{th}$ der Tangentialgeschwindigkeit $v_t$ des Rades 4 bzw. der Geschwindigkeit v der Fahrzeugkarosserie 5 jeweils einen anderen Winkel $\beta_1$, $\beta_2$ im Raum einschließt. Die Projektion der Geschwindigkeit v bzw. $V_{th}$ auf die jeweilige Messstrahlrichtung 7', 7" usw. in der Messstrahlkeule 15 führt dadurch - über den Bereich 17 - zu einer geometriebedingten Aufsplitterung bzw. Aufspreizung ("frequency spread") 18' der Empfangsfrequenzen, wie sie in Fig. 8 z.B. für die Geschwindigkeit v der Fahrzeugkarosserie 5 auf der Höhe $H_1$ als - geometriebedingt aufgespreizter - Empfangsfrequenzverlauf $E_1'$ dargestellt ist und das Ausmaß S einnimmt.

Die dopplereffektbedingte Aufspreizung 18 im Ausmaß $A_1$ (Fig. 6) überlagert sich mit der geometriebedingten Aufspreizung 18' im Ausmaß S (Fig. 8) zu einem "realen" Empfangsfrequenzgemisch F im zeitlichen Verlauf, wie in Fig.

9 dargestellt. An den Orten der Räder 4 wird eine Frequenzaufspreizung im Ausmaß $A_2$ gemessen, welche sich aus der dopplerbedingten Aufspreizung $A_1$ und der geometriebedingten Aufspreizung S zusammensetzt.

Die geometriebedingte Frequenzaufspreizung 18' hängt im Wesentlichen nur von dem Einbauort und der Orientierung des Radar/Lidar-Geräts 16 gegenüber der Fahrbahn 2 bzw. der Fahrlage des Fahrzeugs 1 ab und kann somit z.B. durch Referenzmessungen mit Fahrzeugen 1 (mit verdeckten Rädern oder wenn die Messstrahlkeule 18 nur die Karosserie 5 trifft) eruiert werden. Das Ausmaß S der geometriebedingten Frequenzaufspreizung 18' kann dann als Referenz bzw. Vorgabe für das eigentliche Raddetektionsverfahren herangezogen werden, das den Empfangsfrequenzverlauf von Fig. 9 auswertet und ein Rad 4 detektiert, wenn der aufgezeichnete Verlauf F von Empfangsfrequenzen eine Aufspreizung $A_2$ zeigt, welche das als Referenz vorgegebene Spreizmaß S übersteigt.

Das Spreizmaß S könnte alternativ jeweils aufs Neue bei der Passage eines Fahrzeugs 1 für den aktuellen Detektionsvorgang ermittelt werden, indem die beim Eintritt der Fahrzeugkarosserie 5 in die Messstrahlkeule 18 in den ersten Millisekunden einer Fahrzeugpassage auftretende Frequenzaufspreizung 18' ausgewertet und ihr Spreizmaß S gespeichert und als Schwellwert für die weitere Raddetektion herangezogen wird.

Wie anhand von Fig. 4 und Gl. (4) ersichtlich, entspricht die Einhüllende der dopplerbedingten Frequenzaufspreizung 18 etwa der Umfangskontur das Rades 4, unter dem Winkel β', β" betrachtet, d.h. ist in der Regel eine Ellipse, die gegebenenfalls abgeschnitten ist, wenn der Bereich 17 nicht das gesamte Rad 4 abdeckt, siehe Fig. 6. Unter zusätzlicher Berücksichtigung der geometriebedingten Frequenzaufspreizung 18' wird die Einhüllende zusätzlich im Ausmaß der Spreizung S "unscharf", doch kann sie trotzdem noch in ihrer ungefähren Form analysiert werden, beispielsweise indem das Empfangsfrequenzgemisch F der Referenzpassage eines Referenzrads als "Referenzsignatur" 21 eines sich drehenden Rades gespeichert wird, z.B. in einem Speicher 22 der Vorrichtung 9, um es anschließend mit dem Empfangsfrequenzverlauf F einer aktuellen Fahrzeugpassage zu vergleichen.

Fig. 10 zeigt den realen Fall, dass bei der Passage Tp eines Fahrzeugs 1 Unterbrechungen 23 in der reflektierten Messstrahlkeule 15 und damit im Empfangsfrequenzverlaufsignal F auftreten. Beim Vergleich der Referenzsignaturen 21 mit einem solchen realen Empfangsfrequenzverlauf F können daher geeignete Kontur-, Flächen- und/oder Formenvergleiche ("best-fit match") vorgenommen werden, um auch in solchen Fällen hohe Erkennungssicherheit zu erreichen.

In einer vorteilhaften praktischen Realisierung der Ausführungsform von Fig. 5 wird das Doppler-Radargerät 16 der Vorrichtung 9 unter Verwendung bestehender Funk-Infrastruktur einer Straße aufgebaut, z.B. unter Verwendung von WAVE- oder DSRC-Funkbaken eines Straßenmautsystems oder WLAN-Funkbaken einer straßenseitigen Internet-Infrastruktur. Dadurch können bereits vorhandene Sendeteile der WLAN-, WAVE- oder DSRC-Funkbaken als Sendeteile des Doppler-Radargeräts 16 verwendet werden; ebenso Empfangsteile der Fünkbaken als Empfangsteile des Doppler-Radargeräts 16, oder letztere zumindest in die Empfangsteile der Funkbaken integriert werden. Die Vorrichtung und das Verfahren der Erfindung können auf diese Weise z.B. als eine auf einer herkömmlichen WLAN-, WAVE- oder DSRC-Funkbake laufende Softwareapplikation implementiert werden.

Bislang wurde davon ausgegangen, dass die Sendefreuqenz des Radar/Lidar-Geräts 6 bzw. der Messstrahlkeule 15 konstant ist, d.h. ihr zeitlicher Verlauf ein konstanter Verlauf ist. Es ist jedoch auch möglich, dass das Gerät 6 eine Messstrahlkeule 15 mit einem zeitlich nicht-konstanten Sendefrequenzverlauf aussendet, beispielsweise im Falle von Frequency-Hopping-Verfahren, bei denen die Frequenz ständig - nach einem vorgegebenen bzw. bekannten Muster - wechselt. Die aufgezeichneten Empfangsfrequenzverläufe F werden relativ zu dem vorbekannten zeitlichen Verlauf der Sendefrequenz der Messstrahlkeule 15 - sei er konstant oder wechselnd - aufgezeichnet, d.h. auf diesen referenziert bzw. normiert, so dass der Effekt von bekannten Sendefrequenzverläufen kompensiert werden kann.

Die Erfindung ist demgemäß nicht auf die dargestellten Ausführungsformen beschränkt, sondern umfasst alle Varianten und Modifikationen, die in den Rahmen der angeschlossenen Ansprüche fallen.

**Patentansprüche**

1. Verfahren zur Detektion von Rädern (4) eines Fahrzeugs (1), das auf einer Fahrbahn (2) in einer Fahrtrichtung (3) fährt und dessen Räder (4) zumindest teilweise seitlich freiliegen, mit dem Schritt:

Aussenden einer elektromagnetischen Messstrahlkeule (15) mit einem bekannten zeitlichen Verlauf ihrer Frequenz von der Seite der Fahrbahn (2) her auf einen Bereich über der Fahrbahn (2) und schräg zur Fahrtrichtung (3),
**gekennzeichnet durch** die Schritte:

Empfangen der von einem passierenden Fahrzeug (1) reflektierten Messstrahlkeule (15) und Aufzeichnen aller ihrer Frequenzen im zeitlichen Verlauf relativ zum bekannten Verlauf als Empfangsfrequenzgemischverlauf, und
Detektieren einer während der Fahrzeugpassage ($T_p$) auftretenden Frequenzaufspreizung ($A_2$) im aufge-

zeichneten Verlauf des Empfangsfrequenzgemischs (F), welche einen vorgegebenen Schwellwert (S) übersteigt, als Rad.

2.  Verfahren nach Anspruch 1, **dadurch gekennzeichnet, dass** in einem vorhergehenden Schritt der vorgegebene Schwellwert (S) aus der Frequenzaufspreizung (18') ermittelt wird, die bei der Passage eines radlosen Teils eines Fahrzeugs (1) auftritt.

3.  Vorrichtung zur Detektion von Rädern (4) eines Fahrzeugs (1), das auf einer Fahrbahn (2) in einer Fahrtrichtung (3) fährt und dessen Räder (4) zumindest teilweise seitlich freiliegen, **gekennzeichnet durch**
    zumindest ein Doppler-Lidar- oder -Radargerät (6), das eine elektromagnetische Messstrahlkeule (15) mit einem bekannten zeitlichen Verlauf ihrer Frequenz auf ein Ziel aussendet und alle Frequenzen der vom Ziel reflektierten Messstrahlkeule (15) im zeitlichen Verlauf relativ zum bekannten Verlauf als Empfangsfrequenzgemischverlauf aufzeichnet,
    wobei die Messstrahlkeule (15) von der Seite der Fahrbahn (2) her auf einen Bereich über der Fahrbahn (2) und schräg zur Fahrtrichtung (3) orientiert ist, und
    eine nachgeordnete Auswerteeinrichtung (8), welche eine während der Fahrzeugpassage ($T_p$) auftretende Frequenzaufspreizung ($A_2$) im aufgezeichneten Verlauf des Empfangsfrequenzgemischs (F), die einen vorgegebenen Schwellwert (S) übersteigt, als Rad (4) detektiert.

4.  Vorrichtung nach Anspruch 3 mit einem Doppler-Radargerät (6), **dadurch gekennzeichnet, dass** dieses durch eine stra-ßenseitige WLAN-, WAVE- oder DSRC-Funkbake gebildet ist.

## Claims

1.  A method for detecting wheels (4) of a vehicle (1) that is traveling on a roadway (2) in a travel direction (3), the wheels (4) of which are at least partially exposed laterally, with the step:

    emitting an electromagnetic measurement beam lobe (15) having a known temporal progression of frequency from the side of the roadway (2) onto an area above the roadway (2) and at a slant with respect to the travel direction (3),
    **characterized by** the steps:

    receiving the measurement beam lobe (15) reflected by a passing vehicle (1) and recording the temporal progression, relative to the known progression, of all of its frequencies as progression of a reception frequency mixture, and
    during the passage ($T_p$) of the vehicle, detecting a frequency spread ($A_2$) appearing in the recorded progression of the reception frequency mixture (F) and exceeding a predetermined threshold value (S) as a wheel.

2.  The method according to Claim 1, **characterized in that** the predetermined threshold value (S) is determined in a previous step from a frequency spread (18') that occurs during the passage of a wheel-less part of the vehicle (1).

3.  An apparatus for detecting wheels (4) of a vehicle (1) that is traveling on a roadway (2) in a travel direction (3), the wheels (4) of which are at least partially exposed laterally, **characterized by**
    at least one Doppler lidar or radar device (6) that emits an electromagnetic measurement beam lobe (15) with a known temporal progression of frequency onto a target and records the temporal progression, relative to the known progression, of all frequencies from the measurement beam lobe (15) reflected by the target as progression of a reception frequency mixture,
    wherein the measurement beam lobe (15) is oriented from the side of the roadway (2) onto an area above the roadway (2) and at a slant with respect to the direction of travel (3), and
    a downstream evaluation unit (8) that detects a frequency spread ($A_2$) appearing in the recorded progression of the reception frequency mixture (F) during the passage ($T_p$) of the vehicle and exceeding a predetermined threshold value (S) as a wheel (4).

4.  The apparatus according to Claim 3 with a Doppler radar device (6), **characterized in that** it is constituted by a roadside WLAN, WAVE, or DSRC radio beacon.

**Revendications**

1. Procédé destiné à la détection de roues (4) d'un véhicule (1) qui roule sur une chaussée (2) dans un sens de circulation (3) et dont les roues (4) sont au moins en partie découvertes sur le côté, avec l'étape :

   émission d'un lobe de faisceau de mesure (15) électromagnétique présentant un comportement fréquentiel connue dans le temps depuis le côté de la chaussée (2) sur une zone au-dessus de la chaussée (2) et dans une direction oblique par rapport au sens de circulation (3),
   **caractérisé par** les étapes:

   réception du lobe de faisceau de mesure (15) réfléchi par un véhicule (1) passant et
   enregistrement du comportement de toutes ses fréquences dans le temps par rapport au comportement connu comme comportement d'un mélange de fréquences de réception, et
   détection d'un écartement de fréquence ($A_2$) survenant pendant le passage de véhicule ($T_p$) dans le comportement enregistré du mélange de fréquences de réception (F), qui dépasse une valeur seuil prescrite (S), en tant que roue.

2. Procédé selon la revendication 1, **caractérisé en ce que** dans une étape précédente, la valeur seuil prescrite (S) est déterminée à partir de l'écartement de fréquence (18') qui survient lors du passage d'une partie sans roue d'un véhicule (1).

3. Dispositif destiné à la détection de roues (4) d'un véhicule (1) qui roule sur une chaussée (2) dans un sens de circulation (3) et dont les roues (4) sont au moins en partie découvertes sur le côté, **caractérisé par**
   au moins un appareil doppler, LIDAR ou radar (6) qui émet un lobe de faisceau de mesure (15) électromagnétique présentant un comportement fréquentiel connu dans le temps sur une cible et enregistre le comportement dans le temps de toutes les fréquences du lobe de faisceau de mesure (15) réfléchi par la cible par rapport au comportement connu comme comportement d'un mélange de fréquences de réception,
   le lobe de faisceau de mesure (15) étant orienté depuis le côté de la chaussée (2) sur une zone au-dessus de la chaussée (2) et dans une direction oblique par rapport au sens de circulation (3), et
   un dispositif d'évaluation (8) monté en aval qui détecte un écartement de fréquence ($A_2$) survenant pendant le passage de véhicule ($T_p$) dans le comportement enregistrée du mélange de fréquences de réception (F), qui dépasse une valeur seuil prescrite (S) en tant que roue (4).

4. Dispositif selon la revendication 3 avec un appareil doppler, radar (6), **caractérisé en ce que** celui-ci est formé par une radiobalise WIFI, WAVE ou DSRC côté route.

*Fig. 1*

*Fig. 2*

*Fig. 3*

*Fig. 4*

*Fig. 5*

Fig. 6

Fig. 10

*Fig. 7*

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008037233 A1